# EUROPÄISCHE PATENTSCHRIFT

(11) **EP 0 397 922 B1**
(45) Veröffentlichungstag und Bekanntmachung des Hinweises auf die Patenterteilung: **22.09.1993**
(21) Anmeldenummer: 89123368.6
(22) Anmeldetag: 18.12.1989
(51) Int. Cl.: F16N 13/16, F04B 9/12, F01L 25/06

(54) **Schmierstoffpumpe**
Lubricant pump
Pompe de graissage

(30) Priorität: 19.05.1989 DE 3916422
(43) Veröffentlichungstag der Anmeldung: 22.11.1990
(73) Patentinhaber: Pressol Schmiergeräte GmbH, 90427 Nürnberg (DE)
(72) Erfinder: Henke, Franz, D-8927-Burggen (DE)
(74) Vertreter: Böhme, Volker, Dipl.-Ing.

(56) Entgegenhaltungen:
- US-A- 1 963 783
- US-A- 3 366 066
- US-A- 4 079 660

## Beschreibung

Die Erfindung betrifft eine Schmierstoffpumpe, bei der von einem Schmierstoffbehälter Schmierstoff zu einer Austrittsbohrung förderbar ist und die einen Druckluftkolbenmotor aufweist, bei dem eine Kolbenstange einerends einen in einem Druckluftzylinder befindlichen, im Durchmesser großen Druckluftkolben und anderenends einen Arbeitsfortsatz trägt, bei dem eine Zufuhrleitung für Druckluft zu einer Steuereinrichtung führt, von der eine Leitung für Preßhub zur einen Seite des Druckluftkolbens und eine Leitung für Rückhub zur anderen Seite des Druckluftkolbens führt, bei dem die Steuereinrichtung einen auf der Kolbenstange angeordneten Schieber aufweist, der von Durchlaßbohrungen frei ist und gesteuert von der Hinund Herbewegung der Kolbenstange hin- und herbewegbar ist zwischen einer Stellung, in der er die Zufuhrleitung mit der Leitung für Preßhub verbindet, und einer Stellung, in der er die Zufuhrleitung mit der Leitung für Rückhub verbindet, und bei dem der Schieber in den beiden Stellungen mittels am Schieber angreifender Halteeinrichtung unter Federbeaufschlagung gehalten ist und die Hin- und Herbewegung des Schiebers nach überwindung der Halteeinrichtung unter der Kraft zusammengedrückter Druckfedern erfolgt.

Bei einer bekannten (EP-A 0 039 418) Schmierstoffpumpe dieser Art ist der Schieber ein Drehschieber, der mit der Kolbenstange über eine Gleitführung in Verbindung steht, bei jeder Endstellung der Kolbenstange nur durch den Druck einer Haarnadelfeder die Drehstellung ändert und zwischen den Endstellungen der Kolbenstange mittels einer Steuerschiene in der jeweiligen Drehstellung gehalten ist. Die Druckluft wird in eine Rohrkammer geführt, in welcher der Schieber bewegbar ist, und wird über Leitungsmündungen an einer Stirnwandung der Rohrkammer weitergeführt. Die Haarnadelfedern und die Scheiben werden ständig von Druckluft umspült. Es liegen eine sogenannte Folgesteuerung und Haarnadelfedern vor, die störanfällig sind. Die Länge der Folgesteuerung muß in etwa dem Hub des Durckluftkolbens entsprechen. Die Montage dieser Steuereinrichtung ist schwierig.

Eine Aufgabe der Erfindung ist es daher, eine Schmierstoffpumpe der eingangs genannten Art zu schaffen, bei der unter Meidung von Folgesteuerung und Haarnadelfedern die Federeinrichtung von dem Druckluftstrom getrennt ist. Die erfindungsgemäße Schmierstoffpumpe weist, diese Aufgabe lösend, die kennzeichnenden, Merkmale des Patentanspruchs 1 auf.

Bei dieser Schmierstoffpumpe ist die Wendeldruckfeder zwischen Kolbenstange und Kolbenschieber angeordnet und damit vom Druckluftstrom abgesondert. Der Hub des Druckluftkolbens ist größer als der Federhub. Die Steuerungseinrichtung ist trotz der Verwendung von Federn weniger störanfällig, da eine Wendeldruckfeder verwendet ist. Die Federverrastung wird mittels des Steueranschlages gelöst. Die Montage der erfindungsgemäßen Steuereinrichtung ist vereinfacht.

Besonders zweckmäßig und vorteilhaft ist es, wenn an dem einen Ende des Kolbenschiebers ein Rasterstück der Federverrastung sitzt. Dies vereinfacht die Montage. Die Verrastung greift rechtwinkelig ein und ist verschleißarm.

Besonders zweckmäßig und vorteilhaft ist es auch, wenn die Federverrastung mit Umfangs-Abstand voneinander angeordnete federbeaufschlagte Rastkugeln aufweist. Dadurch werden die Kräfte, welche die Verrastungen auf den Schieher in radialer Richtung ausüben, gegeneinander kompensiert.

Die Ausführungsform gemäß Anspruch 4 stellt eine vereinfachte Steuereinrichtung dar, da sie mit nur drei Ringnuten auskommt, wodurch auch die Dichtungen geschont werden. Die Ringnuten sind stets mit gut gerundeten übergängen zur äußeren Mantelfläche versehen; auch die gut gerundeten Übergänge schonen die Dichtungen.

Die Bauweise gemäß Anspruch 5 vereinfacht die Montage. Auch die Bauweise gemäß Anspruch 6 vereinfacht die Montage; eine Kanalerzeugung durch Guß oder Spanabheben ist vermieden; es liegen große Durchgangsbohrungen vor.

Besonders zweckmäßig und vorteilhaft ist es sodann, wenn relativ zur Rastfeder der Federverrastungen in Umfangsrichtung versetzt ein in jeweils eine der Rastnuten mündender Zugriffskanal vorgesehen ist. Durch diesen Zugriffskanal kann mit einem Werkzeug der Kolbenschieher verschoben werden, wenn er klemmen sollte und auf die Druckluft nicht anspricht.

Die Bauweise gemäß Anspruch 8 verringert die Störanfälligkeit ganz erheblich.

In der Zeichnung ist eine bevorzugte Ausführungsform der Erfindung dargestellt und zeigt
Fig. 1 einen Schnitt eines Druckluftkolbenmotors einer Schmierstoffpumpe, bei einer Stellung eines Kolbenschiebers, und
Fig. 2 den Druckluftkolbenmotor gemäß Fig. 1 im Schnitt bei einer anderen Stellung des Kolbenschiebers.

Der Druckluftkolbenmotor gemäß Zeichnung besitzt einen Druckluftzylinder 1, indem ein im Durchmesser großer Druckluftkolben 2 axial hin- und herbewegbar ist. Bei einer Stirnseite des Durckluftzylinders 1 mündet eine, in einer Zylinderwandung 3 verlaufende Leitung 4 für Preßhub und bei der gegenüberliegenden Stirnseite mündet eine Leitung 5 für Rückhub. Die eine Stirnseite des Druckluftzylinders 1 ist von einem Steuergehäuse 6 gebildet, das von einer Kolbenstange 7 durchquert ist. Die Kolbenstange 7 trägt den Druckluftkolben 2 und ist in dem Steuergehäuse 6 mittels Buchsen 8 geführt gelagert und mittels Ringdichtungen 9 abgedichtet. Auf der dem Druckluftkolben 2 gegenüberliegenden Seite geht die Kolbenstange 7 in einen Arbeitsfortsatz 10 über, der der im Durchmesser kleine Hochdruckkolben einer Schmierstoffpumpe ist und aus einem Flanschansatz 11 herausragt, der ein abschließendes Teil des Steuergehäuses 6 ist. Der Durchmesser des Arbeitsfortsatzes oder Arbeitskolbens kann unter Umständen auch größer als der Durchmesser des Druckluftkolbens sein. Die Kolbenstange 7 ist von zwei Stangenstücken und einem Zwischenstück 12 gebildet, das mit den beiden Stangenstücken verschraubt ist.

In dem Steuergehäuse 6 ist eine Zylinderkammer 13 vorgesehen, die von der Kolbenstange 7 durchquert ist. Auf der Kolbenstange 7 sitzt in der Zylinderkammer 13 ein länglicher Kolbenschieber 14, der in Achsrichtung um einen Rasthub kürzer ist als die Zylinderkammer. Der Kolbenschieber 14 umfaßt auf der Seite des Arbeitsfortsatzes 10 ein Rasterstück 15, das zwei umlaufende Rastnuten 16 bildet, die um den Rasthub in Achsrichtung voneinander entfernt sind. In dem Flanschansatz 11 des Steuergehäuses 6 sitzt radial wirkend eine wendelförmige Rastfeder 17, die eine Rastkugel 32 beaufschlagt und zum Eingriff in die Rastnut 16 drängt. Es sind über den Umfang gleichmäßig verteilt drei solche aus Rastfeder und Rastkugel bestehende Einrichtungen vorgesehen. In der durch diese beiden Einrichtungen gegebenen, zur Mittelachse senkrechten Ebene ist in dem Flanschansatz gegenüber diesen beiden Einrichtungen in Umfangsrichtung versetzt ein nicht gezeigter bohrungsartiger Zugriffskanal vorgesehen, durch den hindurch man mit einem Werkzeug am Rasterstück 15 und damit am Kolbenschieber 14 angreifen kann, um den Kolbenschieber bei Verklemmung zu lösen bzw. leichtgängig zu machen.

Die Wandung der Zylinderkammer 13 ist über den wesentlichen Teil der Kammerlänge von einem in das Steuergehäuse 6 eingesetzten Stapel 18 von Stabilisierungsscheiben 19, Dichtringen 20 und Distanzringen 21 gebildet, die einander in dieser Reihenfolge wiederholt folgen. Die Stabilisierungsscheibe 19 ist metallen und im wesentlichen flach und weist nur auf einer Seite einen flachen umlaufenden Sims auf, der in eine umlaufende Rinne des anschließenden Dichtringes 20 greift. Der Dichtring 20 besteht aus einem elastisch verformbaren Kunststoff oder Gummi, weist beiderseits eine solche umlaufende Rinne auf und überragt die Stabilisierungsscheibe und den Distanzring in radialer Richtung nach innen etwas. Der Distanzring 21 besteht aus Kunststoff und bildet eine Scheibe, die auf einer Seite einen flachen umlaufenden Sims trägt und auf der anderen Seite radial wegragende Distanzstege 22 bildet. Im Bereich dieser Distanzstege 22 ist die Wandung des Steuergehäuses 6 in Umfangsrichtung und in radialer Richtung für Druckluft durchlässig. Der eine Durchlaß 23, der nahe dem Druckluftkolben 2 liegt, ist Teil einer Zufuhrleitung 24; der benachbarte Durchlaß ist Teil der Leitung 5 für Rückhub; der folgende Durchlaß ist Teil einer Ablaßleitung 25; der folgende Durchlaß ist Teil der Leitung 4 für Preßhub; und der folgende Durchlaß, der nahe dem Rasterstück 15 liegt, ist ebenfalls Teil der Zufuhrleitung 24.

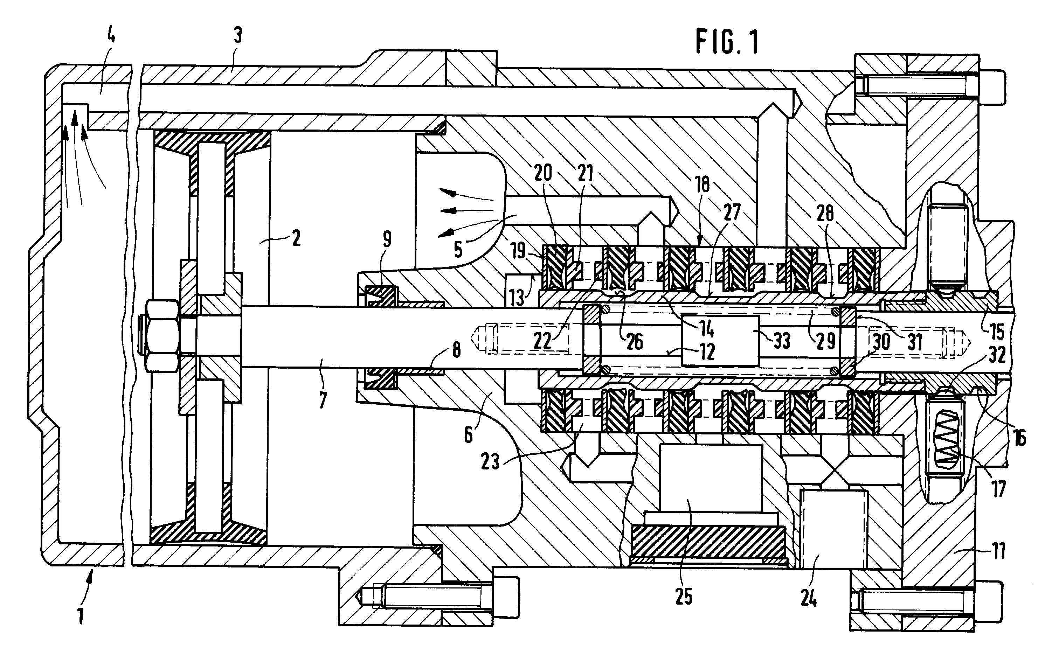

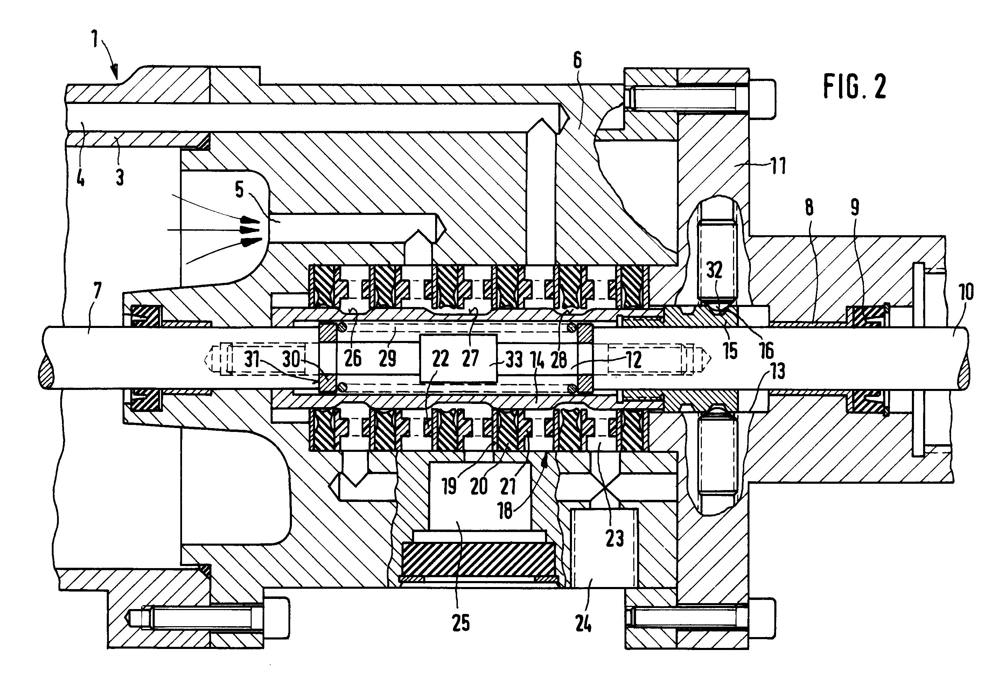

Der Kolbenschieber 14 weist mit axialem Abstand voneinander drei umlaufende Ringnuten 26, 27, 28 auf, die mittels des Kolbenschiebers axial hin- und herschiebbar sind und in die eine Stellung gemäß Fig. 1 sowie in die zweite Stellung gemäß Fig. 2 bewegbar sind. In der einen Stellung für den Rückhub gemäß Fig. 1 ist der eine Durchlaß der Zufuhrleitung 24 über die eine Ringnut 26 mit dem Durchlaß der Leitung 5 für Rückhub verbunden; ist der Durchlaß der Ablaßleitung 25 über die zweite Ringnut 27 mit dem Durchlaß der Leitung 4 für Preßhub verbunden; und ist der zweite Durchlaß der Zufuhrleitung 24 samt dritter Ringnut 28 stillgelegt. In der zweiten Stellung für den Preßhub gemäß Fig. 2 ist der erste Durchlaß der Zufuhrleitung 24 samt erster Ringnut 26 stillgelegt; ist der Durchlaß der Leitung 5 für Rückhub über die zweite Ringnut 27 mit dem Durchlaß der Ablaßleitung 25 verbunden; und ist der Durchlaß der Leitung 4 für Preßhub über die dritte Ringnut 28 mit dem Durchlaß der Zufuhrleitung 24 verbunden. Auf einem im Durchmesser verringerten mittleren Bereich der Kolbenstange 7 ist eine Wendeldruckfeder 29 vorgesehen, die beiderends an je einer Anschlagsscheibe 30 abgestützt ist, die jeweils an einer Stufe 31 der Kolbenstange 7 anliegen. Die Wendeldruckfeder 29 läßt sich in dem Kolbenschieber 14 um einen Freihub axial hinund herbewegen.

Die Kolbenstange 7 trägt mittig zwischen den beiden Anschlagscheiben 30 einen blockartigen Steueranschlag 33. Fig. 1 zeigt den Druckluftkolben 2 während eines Rückhubes, nachdem die Wendeldruckfeder 29 sich entspannt hat. Der Druckluftkolben 2 wandert weiter nach links, bis die linke Anschlagscheibe 30 an das linke Stirnteil des Kolbenschiebers 14 stößt. Der Druckluftkolben 2 wandert weiter nach links und komprimiert die Wendeldruckfeder 29, bis die linke Kante des Steueranschlages 33 über die linke Anschlagscheibe 30 an dem Kolbenschieber 14 angreift und die Rastkugel 32 gegen die Kraft der Rastfeder 17 aus der linken Rastnut 16 drängt. Der Kolbenschieber 14 springt um den Rasthub nach links um, mit bedingt durch das Entspannen der Wendeldruckfeder 29, die nur Gleitreibung zu überwinden hat. Sodann wandert der Druckluftkolben 2 gemäß Fig. 2 zum Preßhub nach rechts und zwar unter Verschiebung der Wendeldruckfeder im Kolbenschieber 14 nach rechts. Der Druckluftkolben 2 wandert weiter nach rechts und komprimiert die Wendeldruckfeder 29, bis die rechte Kante des Steueranschlages 33 an dem Kolbenschieber 14 angreift und die Rastkugel 32 wegdrückt. Der Kolbenschieber 14 springt wieder um den Rasthub nach rechts in die Stellung für Rückhub um. Das Bewegungsspiel beginnt von neuem. Die maximale tatsächliche Komprimierung der Wendeldruckfeder ist nur ein geringer Prozentsatz der maximal möglichen Komprimierung. Die Wendeldruckfeder entspannt beim Umspringen vollständig, d.h. erreicht ihre maximale Länge.

## Patentansprüche

1. Schmierstoffpumpe, bei der von einem Schmierstoffbehälter Schmierstoff zu einer Austrittsbohrung förderbar ist und die einen Druckluftkolbenmotor aufweist,
bei dem eine Kolbenstange (7) einerends einen in einem Druckluftzylinder (1) befindlichen, im Durchmesser großen Druckluftkolben (2) und anderenends einen Arbeitsfortsatz (10) trägt,
bei dem eine Zufuhrleitung für Druckluft zu einer Steuereinrichtung führt, von der eine Leitung (4) für Preßhub zur einen Seite des Druckluftkolbens und eine Leitung (5) für Rückhub zur anderen Seite des Druckluftkolbens führt,
bei dem die Steuereinrichtung einen auf der Kolbenstange (7) angeordneten Schieber (14) aufweist, der von Durchlaßbohrungen frei ist und gesteuert von der Hin- und Herbewegung der Kolbenstange hin- und herbewegbar ist zwischen einer Stellung, in der er die Zufuhrleitung mit der Leitung (4) für Preßhub verbindet, und einer Stellung, in der er die Zufuhrleitung mit der Leitung für Rückhub verbindet, und
bei dem der Schieber (14) in den beiden Stellungen mittels am Schieber angreifender Halteeinrichtung unter Federbeaufschlagung gehalten ist und die Hin- und Herbewegung des Schiebers nach Überwindung der Halteeinrichtung unter der Kraft zusammengedrückter Druckfedern erfolgt,
dadurch gekennzeichnet,
daß der Schieber in an sich bekannter Weise ein in einer Zylinderkammer (13) axial verschiebbarer Kolbenschieber (14) ist, der am Mantel Ringnuten (26,27,28) bildet, über die Durchlässe (23) in der Zylinderwandung miteinander verbindbar sind,
daß die Halteeinrichtung eine radial wirkende Federverrastung ist, die eine Rastfeder (17) und in Achsrichtung um einen Rasthub voneinander entfernte Rastnuten (16) aufweist,
daß die Kolbenstange (7) in einer Höhlung des Kolbenschiebers (14) eine Wendeldruckfeder (29) trägt und mit dieser in der Höhlung um einen Freihub hin- und herbewegbar ist und daß die Kolbenstange (7) nach dem Freihub unter Zusammendrückung der Wendeldruckfeder (29) um einen Federhub und - bei Überwindung der Federverrastung (17,16) durch einen an der Kolbenstange (7) vorgesehenen Steueranschlag (33) - um den Rasthub bewegbar ist,
indem die Kolbenstange (7) im Bereich der Höhlung des Kolbenschiebers (14) zwei axial voneinander beabstandete Anschlag-Stufen (31) aufweist, deren Abstand voneinander kleiner als die axiale Länge der Höhlung ist,
indem an den beiden Anschlag-Stufen (31) axial innen je eine Anschlagscheibe (30) anliegt, die gemeinsam durch die dazwischen angeordnete Wendeldruckfeder (29) beaufschlagt sind und deren Außendurchmesser größer sind als die Durchgangsbohrungen der Kolbenstange (7) durch den Kolbenschieber (14) und kleiner als der Durchmesser der Höhlung, und
indem der Steueranschlag (33) zwischen den Anschlag-Stufen (31) angeordnet ist und die Anschlagscheiben (30) zwischen den dazugehörigen Anschlag-Stufen (31) und dem Steueranschlag (33) axial beweglich sind.

2. Schmierstoffpumpe nach Anspruch 1, dadurch gekennzeichnet, daß an dem einen Ende des Kolbenschiebers (14) ein Rasterstück (15) der Federverrastung (17, 16) sitzt.

3. Schmierstoffpumpe nach Anspruch 1 oder 2, dadurch gekennzeichnet, daß die Federverrastung (17, 16) mit Umfangs-Abstand voneinander angeordnete federbeaufschlagte Rastkugeln (32) aufweist.

4. Schmierstoffpumpe nach Anspruch 1, 2 oder 3, dadurch gekennzeichnet, daß der Kolbengchieber (14) mittig eine Ringnut (27) aufweist, die bei beiden Stellungen mit einer Ablaßleitung (25) verbunden ist, und auf beiden Seiten je eine Ringnut (26, 28) aufweist, die bei beiden Stellungen beide mit der Zufuhrleitung (24) verbunden sind und von denen die eine (28) bei einer Stellung mit der Leitung (4) für Preßhub und die andere (26) bei der anderen Stellung mit der Leitung (5) für Rückhub verbunden ist.

5. Schmierstoffpumpe nach einem der vorhergehenden Ansprüche, dadurch gekennzeichnet, daß die Kolbenstange (7) von zwei Stangenstücken und einem zwischengeschraubten, die Wendeldruckfeder (29) tragenden Zwischenstück (12) gebildet ist.

6. Schmierstoffpumpe nach einem der vorhergehenden Ansprüche, dadurch gekennzeichnet, daß die die Durchlässe (23) bildende Zylinderwandung als ein Stapel (18) von aneinandergelegten Stabilisierungsscheiben (19), Dichtringen (20) und Distanzringen (21), welche radiale Durchlässe (23) als Teile der Leitung (4) für Preßhub, der Leitung (5) für Rückhub und der Zufuhrleitung (24) bilden, gestaltet sind.

7. Schmierstoffpumpe nach einem der vorhergehenden Ansprüche, dadurch gekennzeichnet, daß relativ zur Rastfeder der Federverrastungen in Umfangsrichtung versetzt ein in jeweils eine der Rastnuten mündender Zugriffskanal vorgesehen ist.

8. Schmierstoffpumpe nach einem der vorhergehenden Ansprüche, dadurch gekennzeichnet, daß die Wendeldruckfeder (29) und auch die gewendelte Rastfeder (17) stets ungeblockt sind und einen Federweg durchlaufen, der nur ein Bruchteil des maximal möglichen Kompressionsweges ist.

## Claims

1. A lubricant pump, with which lubricant may be conveyed from a lubricant reservoir to an exit bore, and which has a compressed-air piston motor,
in which a piston rod (7) bears at one end a large-diameter compressed-air piston (2) located in a compressed-air cylinder (1) and at the other end an operating extension (10),
in which a supply line for compressed-air runs to a control means, from which a line (4) for the compression stroke runs to one side of the compressed-air piston and a line (5) for the return stroke runs to the other side of the compressed-air piston,
in which the control means has a slide valve (14) arranged on the piston rod (7) which is free of passage bores and is movable to and fro, controlled by the reciprocating movement of the piston rod, between a position in which it connects the supply line to the line (4) for the compression stroke, and a position in which it connects the supply line to the line for the return stroke, and
in which the slide valve (14) is held in the two positions under spring action by means of a holding means acting on the slide valve, and the reciprocating movement of the slide valve takes place when the holding means has been overcome under the force of compressed compression springs,
characterised in that, in a manner known per se, the slide valve is a piston slide valve (14) which is axially displaceable in a cylinder chamber (13) and which forms annular grooves (26, 27, 28) on the casing, by means of which the openings (23) in the cylinder wall may be connected to one another,
in that the holding means is a radially acting spring catch which has a stop spring (17) and engaging grooves (16) distanced from one another in the axial direction by one engaging stroke,
in that the piston rod (7) bears a spiral compression spring (29) in a recess of the piston slide valve (14) and is movable therewith to and fro in the recess by a free stroke, and in that after the free stroke, the piston rod (7) is movable by one spring stroke, with compression of the spiral compression spring (29) and - with the spring catch (17, 16) overcome by means of a control stop (33) provided on the piston rod (7) - is movable by the engaging stroke,
by the piston rod (7) having in the region of the recess of the piston slide valve (14) two stop steps (31), spaced axially apart from one another, the distance apart thereof being smaller than the axial length of the recess,
by respective stop plates (30) adjoining the two stop steps (31) axially on the inside, these being acted upon jointly by the spiral compression spring (29) arranged between them, and their external diameter being greater than the passage bores of the piston rod (7) through the piston slide valve (14) and smaller than the diameter of the recess, and
by the control stop (33) being arranged between the stop steps (31), and the stop plates (30) being mobile axially between the stop steps (31) belonging thereto and the control stop (33).

2. A lubricant pump according to claim 1, characterised in that seated at one end of the piston slide valve (14) is an engaging piece (15) of the spring catch (17, 16).

3. A lubricant pump according to claim 1 or 2, characterised in that the spring catch (17, 16) has spring-operated engaging balls (32) arranged with peripheral spacing from one another.

4. A lubricant pump according to claim 1, 2 or 3, characterised in that centrally the piston slide valve (14) has an annular groove (27) which, in the two positions, is connected to a discharge line (25), and on the two sides has respective annular grooves (26, 28) which are both connected to the supply line (24) in the two positions and one (28) of which, in one position, is connected to the line (4) for the compression stroke and the other (26), in the other position, is connected to the line (5) for the return stroke.

5. A lubricant pump according to one of the preceding claims, characterised in that the piston rod (7) is formed by two rod pieces and an intermediate piece (12) screwed between them and bearing the spiral compression spring (29).

6. A lubricant pump according to one of the preceding claims, characterised in that the cylinder wall forming the openings (23) is designed as a stack (18) of stabilizing plates (19), sealing rings (20) and spacer rings (21), placed adjacent to one another, which form radial openings (23) as parts of the line (4) for the compression stroke, the line (5) for the return stroke and the supply line (24).

7. A lubricant pump according to one of the preceding claims, characterised in that an access duct is provided, displaced in the peripheral direction relative to the stop spring of the spring catches, which opens into one of the engaging grooves respectively.

8. A lubricant pump according to one of the preceding claims, characterised in that the spiral compression spring (29) and also the coiled stop spring (17) are always unblocked and cover a distance of spring travel which is only a fraction of the maximum possible compression distance.

## Revendications

1. Pompe à lubrifiant dans laquelle le lubrifiant peut être amené d'un récipient de lubrifiant à un alésage de sortie et qui comporte un moteur à piston à air comprimé dans lequel une tige de piston (7) porte à une extrémité un piston à air comprimé (2) de grand diamètre situé dans un cylindre à air comprimé (1) et à l'autre extrémité un prolongement moteur (10), dans lequel une conduite d'amenée pour l'air comprimé conduit à un dispositif de commande duquel une conduite (4) pour la course de compression aboutit à un côté du piston à air comprimé et une conduite (5) pour la course de retour aboutit à l'autre côté du piston à air comprimé, dans lequel le dispositif de commande présente un tiroir (14), disposé sur la tige de piston (7), qui est exempt d'orifices de traversée et qui, étant commandé par le mouvement de va et vient de la tige de piston, est mobile dans un sens et dans l'autre entre une position dans laquelle il relie la conduite d'amenée à la conduite (4) pour la course de compression et une position dans laquelle il relie la conduite d'amenée à la conduite pour la course de retour, et dans lequel le tiroir (14) est maintenu dans les deux positions avec sollicitation par ressort au moyen d'un dispositif de maintien agissant sur le tiroir et le mouvement de va et vient du tiroir se produit après que le dispositif de maintien ait été surmonté sous la force de ressorts de compression écrasés, caractérisée en ce que le tiroir est de manière connue en soi un tiroir à piston (14) déplaçable axialement dans une chambre cylindrique (13), qui forme sur l'enveloppe des rainures annulaires (26, 27, 28) par lesquelles des passages (23) de la paroi du cylindre peuvent être reliés entre eux, en ce que le dispositif de maintien est un dispositif d'enclenchement à ressort agissant radialement qui comporte un ressort d'enclenchement (17) et des rainures d'enclenchement (16) écartées les unes des autres d'une course d'enclenchement en direction axiale, en ce que la tige de piston (7) porte dans un évidement du tiroir à piston (14) un ressort de pression hélicoïdal (29) et est mobile dans un sens et dans l'autre d'une course libre avec celui-ci dans l'évidement et en ce que, après la course libre, la tige de piston (7) est déplaçable d'une course de ressort avec écrasement du ressort de pression hélicoïdal (29), et, le dispositif d'enclenchement par ressort (17, 16) étant surmonté par une butée de commande (33) prévue sur la tige de piston (7), de la course d'enclenchement, en ce que la tige de piston (7) comporte, dans le domaine de l'évidement du tiroir à piston (14), deux gradins de butée (31) distants axialement l'un de l'autre, dont la distance mutuelle est inférieure à la longueur axiale de l'évidement, en ce qu'un disque de butée (30) repose axialement à l'intérieur sur chacun des deux gradins de butée (31), les disques de butée étant sollicités ensemble par le ressort de pression hélicoïdal (29) disposé entre eux et leur diamètre externe étant supérieur à celui des alésages traversants de la tige de piston (7) à travers le tiroir à piston (14) et inférieur au diamètre de l'évidement, et en ce que la butée de commande (33) est disposée entre les gradins de butée (31) et les disques de butée (30) sont mobiles axialement entre les gradins de butée (31) correspondants et la butée de commande (33).

2. Pompe à lubrifiant selon la revendication 1, caractérisée en ce qu'une pièce d'enclenchement (15) du dispositif d'enclenchement à ressort (17, 16) est située à une extrémité du tiroir à piston (14).

3. Pompe à lubrifiant selon la revendication 1 ou 2, caractérisée en ce que le dispositif d'enclenchement à ressort (17, 16) présente des billes d'enclenchement sollicitées par ressort, écartées les unes des autres sur la périphérie.

4. Pompe à lubrifiant selon la revendication 1, 2 ou 3, caractérisée en ce que le tiroir à piston (14) comporte au milieu une rainure annulaire (27) qui est reliée dans les deux positions à une conduite d'évacuation (25), et, des deux côtés, des rainures annulaires (26, 28) qui, dans les deux positions, sont reliées toutes deux à la conduite d'amenée (24) et parmi lesquelles l'une (28) est reliée, dans une position, à la conduite (4) pour la course de compression et l'autre (26) est reliée, dans l'autre position, à la conduite (5) pour la course de retour.

5. Pompe à lubrifiant selon l'une des revendications précédentes, caractérisée en ce que la tige de piston (7) est formée par deux tronçons de tige et par un tronçon intermédiaire (12) vissé entre les précédents et portant le ressort de pression hélicoïdal (29).

6. Pompe à lubrifiant selon l'une des revendications précédentes, caractérisée en ce que la paroi du cylindre qui forme les passages (23) est constituée par un empilement (18) de disques de stabilisation (19), de bagues d'étanchéité (20) et de bagues d'écartement (21) appliqués les uns contre les autres, qui forment des passages radiaux (23) faisant partie de la conduite (4) pour la course de compression, de la conduite (5) pour la course de retour et de la conduite d'amenée (24).

7. Pompe à lubrifiant selon l'une des revendications précédentes, caractérisée en ce qu'il est prévu, de manière décalée en direction périphérique par rapport au ressort d'enclenchement des dispositifs d'enclenchement à ressort, un canal d'accès qui débouche dans l'une des rainures d'enclenchement.

8. Pompe à lubrifiant selon l'une des revendications précédentes, caractérisée en ce que le ressort de pression hélicoïdal (29) et aussi le ressort d'enclenchement spiralé (17) sont constamment exempts d'adhérence par contact et parcourent un trajet élastique qui ne constitue qu'une fraction du trajet maximal de compression possible.
